## Europäisches Patentamt

## European Patent Office

## Office européen des brevets

(11) Veröffentlichungsnummer: **0 046 842 B1**

(12) **EUROPÄISCHE PATENTSCHRIFT**

(45) Veröffentlichungstag der Patentschrift:
29.08.84

(21) Anmeldenummer: 81103518.7

(22) Anmeldetag: 08.05.81

(51) Int. Cl.³: **G 09 F 13/14**, G 08 B 5/36

(54) Vorrichtung zur gleichmässigen Ausleuchtung von Schriftfeldern.

(30) Priorität: 03.09.80 DE 3033096

(43) Veröffentlichungstag der Anmeldung:
10.03.82 Patentblatt 82/10

(45) Bekanntmachung des Hinweises auf die Patenterteilung:
29.08.84 Patentblatt 84/35

(84) Benannte Vertragsstaaten:
DE FR GB IT

(56) Entgegenhaltungen:
DE - C - 231 871
DE - C - 474 054
DE - C - 585 712
DE - C - 762 648
DE - U - 1 726 863
DE - U - 1 789 399
FR - A - 2 324 207

(73) Patentinhaber: ROBERT BOSCH GMBH, Postfach 50,
D-7000 Stuttgart 1 (DE)

(72) Erfinder: Bräutigam, Rolf, Baumäcker 14, D-8551 Markt
Igensdorf (DE)
Erfinder: Wesemeyer, Jürgen, Dipl.-Ing., Klosterweg 122,
D-8500 Nürnberg (DE)
Erfinder: Zöbl, Hartmut, Moststrasse 25, D-8510 Fürth
(DE)

BUNDESDRUCKEREI BERLIN

## Beschreibung

Die Erfindung geht aus von einer Vorrichtung zur Ausleuchtung von Schriftfeldern auf einer Frontplatte nach dem Gattungsteil des Hauptanspruchs. Bei einer bekannten Lösung wird das Licht zur Ausleuchtung bestimmter Schriftfelder von einer oder mehreren Lichtquellen durch Prismen umgeleitet, so daß das hinter der Frontplatte erzeugte Licht auch solche Schriftfelder auf der Frontplatte gleichmäßig ausleuchtet, die von der Lichtquelle weiter entfernt sind als andere Schriftfelder. Das Licht scheint dabei durch die Schrift hindurch, so daß sie auf der Frontplatte von vorn klar erkennbar ist. Es ist auch bereits bekannt, mehrere Schriftfelder einer Frontplatte durch Lichtleitfasern gleichmäßig auszuleuchten, die von einer Lichtquelle ausgehen. Ferner ist bekannt, hinter der Frontplatte ein lichtdurchlässiges Papier anzuordnen (DE-U-1 726 863), oder statt dessen die Frontplatte mit unterschiedlich lichtdurchlässigem Lack zu bedrucken, bzw. an verschiedenen Bereichen mit dem gleichem Lack mehrfach zu bedrucken, um so eine gleichmäßige Ausleuchtung aller Schriftfelder der Frontplatte mit möglichst wenig punktförmigen Lichtquellen, z. B. Glühlampen, zu erreichen. Die bekannten Lösungen sind aber teils sehr aufwendig und teils unzureichend. Prismen, Lichtleitfasern und Papierfolien müssen zwischen den Lichtquellen und den Schriftfeldern schüttelsicher befestigt werden. Wird die Frontplatte mehrfach mit einem lichtdurchlässigen Lack bedruckt, so dunkelt dieser im Laufe der Zeit unterschiedlich nach, wodurch die gleichmäßige Ausleuchtung der betroffenen Schriftfelder verlorengeht. Dies gilt auch für Papierfolien, die insbesondere durch stärkere Erwärmung im Bereich der Lichtquelle nachdunkeln.

Aus der FR-A-2 324 207 ist es bekannt, zur Ausleuchtung von Skalen unmittelbar von einer Glühlampe eine Blende anzuordnen, die zur Vermeidung von direktem Schlaglicht die Glühlampe nach vorne hin abdeckt. Durch die äußere Kontur der Blende ist eine gezielte Verteilung des Lichtes nicht möglich, so daß sich diese Lösung zur Ausleuchtung mehrerer Schriftfelder auf der Frontplatte eines Gerätes nicht eignet. Außerdem wird die Wärmeabfuhr an der Glühlampe durch den geringen Abstand der Blende behindert, was zu einer kürzeren Lebensdauer der Glühlampe führt. Aus der DE-U-1 789 399 ist ein Anzeigeinstrument mit mehreren Schriftfeldern bekannt, die in Form einer Ringskala angeordnet sind und die von mehreren Glühlampen beleuchtet werden. Die Glühlampen sind nach vorn hin durch eine Blende abgedeckt, die an ihrem Rand einen Ringspalt für die Skalenbeleuchtung bildet. Da bei dieser Lösung nur die ringförmig angeordneten Schriftfelder beleuchtet werden, ist sie zur gleichmäßigen Ausleuchtung von Schriftfeldern auf der Frontplatte eines Gerätes ungeeignet. Schließlich ist aus der DE-C-474 054 eine Vorrichtung bekannt, bei der ein größeres Schriftfeld auf der Frontplatte eines Gerätes durch eine Blende hindurch von mehreren nebeneinander angeordneten Glühlampen ausgeleuchtet wird. Die Blende ist dabei nach vorn hin mit einer Spiegelschicht versehen, in der gleichgroße und gleichmäßig verteilte Öffnungen eingearbeitet sind, um auf diese Weise sowohl das Licht der Glühlampen als auch das von oben einfallende Tageslicht auf das Schriftfeld zu lenken. Nachteilig ist hier, daß hinter der Blende mehrere Glühlampen angebracht werden müssen, um das Schriftfeld an der Frontplatte möglichst gleichmäßig auszuleuchten.

Mit der vorgeschlagenen Lösung wird angestrebt, verschiedene Bereiche der Frontplatte, in denen sich die Schriftfelder befinden, über eine Blende von einer Lichtquelle möglichst gleichmäßig auszuleuchten und dabei sowohl das direkte als auch das indirekte Licht der Lichtquelle auszunutzen.

Durch die erfindungsgemäße Anbringung von Öffnungen in der zwischen der Lichtquelle und den Schriftfeldern angeordneten Blende ist mit einfachen Mitteln eine sehr gleichmäßige Ausleuchtung aller Schriftfelder möglich, da ähnlich wie die Blende eines Fotoapparates auch die vorgeschlagene Blende durch die Abmessungen ihrer Schlitze bzw. Löcher nur soviel direktes und indirektes Licht von der Lichtquelle auf das jeweils zu beleuchtende Schriftfeld durchläßt, daß die Helligkeit aller von der gleichen Lichtquelle zu beleuchtenden Schriftfelder gleich groß ist.

Durch die in den abhängigen Ansprüchen aufgeführten Maßnahmen sind vorteilhafte Weiterbildungen und Verbesserungen des im Hauptanspruch angegebenen Merkmales möglich. Besonders vorteilhaft ist es, die Blende zur Lichtquelle hin mit einer lichtreflektierenden Oberfläche zu versehen, die mit einer weiteren lichtreflektierenden Oberfläche zusammenwirkt, welche der Oberfläche der Blende mit Abstand gegenüberliegt. Die Lichtquelle ist dabei zweckmäßigerweise zwischen den zwei lichtreflektierenden Oberflächen angeordnet. Durch diese Maßnahme werden Schlaglichter und Schatten auf der Frontplatte vermieden.

Ein Ausführungsbeispiel der Erfindung ist in der Zeichnung dargestellt und in der nachfolgenden Beschreibung näher erläutert. Es zeigt

Fig. 1 die Frontscheibe eines Anzeigegerätes mit einer Anzahl von Schriftfeldern,

Fig. 2 zeigt den Querschnitt durch das Anzeigegerät, und

Fig. 3 zeigt eine hinter der Frontplatte anzuordnende Blende.

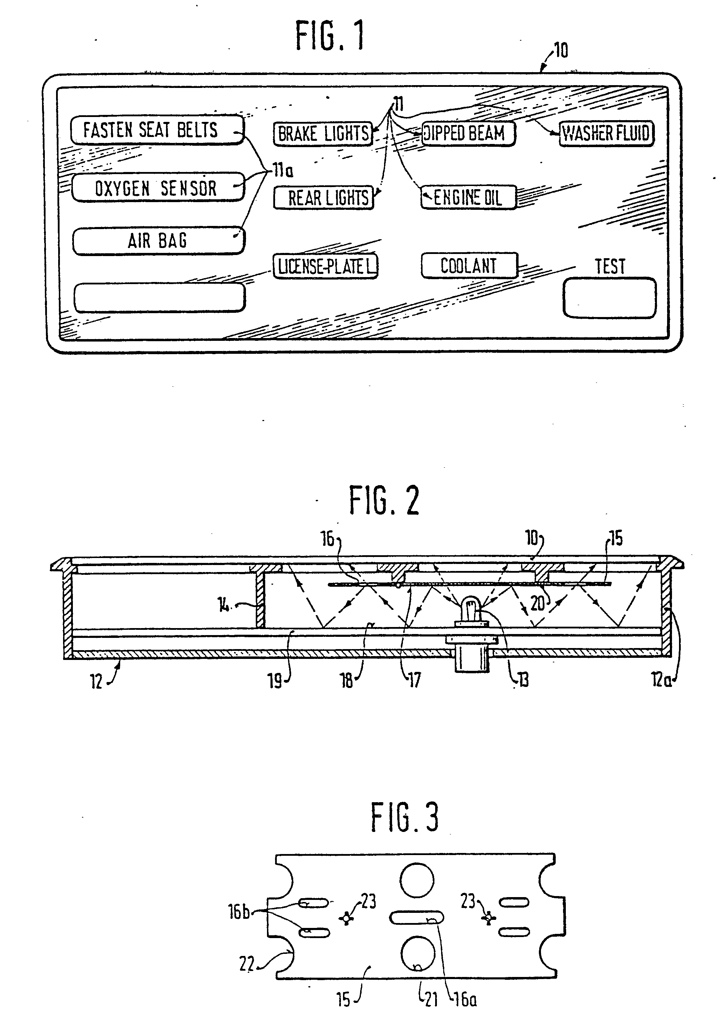

In Fig. 1 ist die Frontplatte eines Anzeigegerätes für ein Kraftfahrzeug mit 10 bezeichnet. Die Frontplatte 10 ist mit mehreren nebeneinander und untereinander angeordneten Schriftfeldern 11 versehen, mit denen dem Fahrer verschiedene Informationen über den jeweiligen Zustand bzw. über die Funktion verschiedener Einrichtungen im Fahrzeug mitgeteilt werden. Die Frontplatte 10 ist lichtdurchlässig und mit Ausnahme der Schriftfelder 11 mit einer schwarzen Farbschicht bedeckt. Im Gehäuse des Anzeigerätes 12 ist — wie Fig. 2 zeigt — eine Glühlampe 13 zur Ausleuchtung der Schriftfelder 11 angeordnet. Die linken Schriftfelder 11a sind durch eine Trennwand 14 von den Schriftfeldern 11 getrennt, welche durch die Glühlampe 13 ausgeleuchtet werden sollen. Die Schriftfelder 11a werden ohne zusätzliche Maßnahmen von einer weiteren, nicht dargestellten Glühlampe ausgeleuchtet.

Um sicherzustellen, daß die Schriftfelder 11 durch die Glühlampe 13 gleichmäßig ausgeleuchtet werden, ist zwischen der Glühlampe 13 und der Frontplatte 10 eine Blende 15 angeordnet, die Öffnungen 16 im Bereich der Schriftfelder 11 aufweist. Die Größe und die Anzahl der Öffnungen 16 ist einerseits von der Größe des jeweils ihnen zugeordneten Schriftfeldes 11 und andererseits von der Entfernung des Schriftfeldes 11 zur Glühlampe 13 abhängig. Bei größerer Entfernung des Schriftfeldes 11 zur Glühlampe 13 wird die Größe bzw. Anzahl der Öffnungen 16 zunehmen. Die Leistung der Glühlampe ist so ausgelegt, daß auch die entfernt liegenden Schriftfelder 11 noch deutlich wahrnehmbar ausgeleuchtet sind. Durch die Blende 15 wird soviel Licht von den näher an der Glühlampe 13 liegenden Schriftfeldern 11 ferngehalten, daß alle Schriftfelder 11 gleichmäßig ausgeleuchtet sind. Um Schlaglicht bzw. Schattenbildung im Bereich der Schriftfelder 11 zu vermeiden, hat die Blende 15 zur Glühlampe 13 hin eine lichtreflektierende Oberfläche 17. Mit einem Abstand zur Oberfläche 17 der Blende 15 liegt eine weitere lichtreflektierende Oberfläche 18, die von einer im Gehäuse 12a des Anzeigegerätes 12 angeordneten Leiterplatte 19 gebildet ist. Die Glühlampe 13 ist in der Leiterplatte befestigt und ihre Lichtqelle liegt nunmehr zwischen den zwei lichtreflektierenden Oberflächen 17 und 18. Die Blende 15 ist an Vorsprüngen 20 auf der Rückseite der Frontplatte 10 befestigt. Sie liegt ebenso wie die Leiterplatte 19 parallel zur Frontplatte 10 und verläuft mitten zwischen Frontplatte 10 und Glühlampe 13.

Fig. 3 zeigt die Blende 15 in der Draufsicht. Mehrere Löcher 21 und Ausnehmungen 22 dienen zur Aufnahme von Leuchtdioden, die jeweils einem der Schriftfelder 11 zugeordnet sind. Die Leuchtdioden, die in Fig. 2 nicht dargestellt sind, befinden sich jeweils unter dem ihnen zugeordneten Schriftfeld 11 und leuchten durch die schwarze Farbe der Frontplatte 10 von außen gut sichtbar durch. Der Lichtdurchlaß für das mittlere Schriftfeld 11 wird durch einen länglichen Schlitz 16a dosiert. Für die seitlich davon liegenden Schriftfelder 11 wird der Lichtdurchlaß durch paarweise Schlitze 16b dosiert, die beidseitig neben den ihnen zugeordneten Schriftfeldern 11 angeordnet sind. Auch hier wird durch das indirekte, reflektierte Licht eine gleichmäßige Ausleuchtung der Schriftfelder 11 ohne Schattenbildung sichergestellt. Zwei weitere Löcher 23 dienen zur Befestigung der Blende 15 an den Vorsprüngen 20 der Frontplatte 10. Das reflektierte Licht der Glühlampe 13, das seitlich neben der Blende 15 zur Frontplatte 10 gelangt, wird im vorliegenden Ausführungsbeispiel zur Ausleuchtung der äußeren Schriftfelder 11 mit verwendet.

Anstelle von Glühlampen können auch andere Lichtqellen verwendet werden. Außerdem kann zur Erhöhung der Lichtreflexion die reflektierende Oberfläche 18 der Leiterplatte 19 mit einem Lack oder mit weißer Farbe überzogen werden. Größe, Form und Anzahl der Öffnungen 16 werden von Fall zu Fall der Größe und der Form der Schriftfelder und ihrer Entfernung zur Lichtquelle unter Berücksichtigung des reflektierten, indirekten Lichtes optimal angepaßt.

## Patentansprüche

1. Vorrichtung zur Ausleuchtung von mehreren Schriftfeldern einer Frontplatte mit einer Lichtquelle, die in einem von der Frontplatte abgedeckten Gehäuse angeordnet ist, wobei sich zwischen der Lichtquelle und der Frontplatte eine Blende befindet, dadurch gekennzeichnet, daß die Blende (15) im Bereich der Schriftfelder (11) Öffnungen (16) aufweist, deren Größe bzw. deren Anzahl einerseits mit der Größe des ihnen zugeordneten Schriftfeldes (11) und andererseits mit der unterschiedlichen Entfernung des jeweiligen Schriftfeldes (11) zur Lichtquelle (13) derart zunimmt, daß die Schriftfelder (11) gleichmäßig ausgeleuchtet sind.

2. Vorrichtung nach Anspruch 1, dadurch gekennzeichnet, daß die Blende (15) zur Lichtquelle (13) hin eine lichtreflektierende Oberfläche (17) hat und daß mit Abstand von dieser Oberfläche (17) eine weitere lichtreflektierende Oberfläche (18) der Blende (15) gegenüberliegt.

3. Vorrichtung nach Anspruch 2, dadurch gekennzeichnet, daß die Lichtquelle (13) zwischen den beiden lichtreflektierenden Oberflächen (17, 18) angeordnet ist.

4. Vorrichtung nach Anspruch 3, dadurch gekennzeichnet, daß die zweite lichtreflektierende Oberfläche (18) von einer im Gehäuse (12a) angeordneten Leiterplatte (19) gebildet ist.

5. Vorrichtung nach Anspruch 4, dadurch gekennzeichnet, daß die Blende (15) und die Leiterplatte (19) parallel zur Frontplatte (10) liegen und daß die Blende (15) im Bereich der Lichtquelle (13) etwa mitten zwischen Frontplatte (10) und Lichtquelle (13) verläuft.

6. Vorrichtung nach einem der vorherigen Ansprüche, dadurch gekennzeichnet, daß die Öffnungen (16) der Blende (15) zum Teil als paarweise Schlitze (16b) beidseitig neben den ihnen zugeordneten Schriftfeldern (11) angeordnet sind.

## Claims

1. Device for illuminating several blocks of lettering on a face plate with a light source which is arranged in a housing covered by the face plate, a diaphragm being located between the light source and the face plate, characterised in that the diaphragm (15) has orifices (16) in the region of the blocks of lettering (11), the size and/or number of the orifices increasing, on the one hand, with the size of the block of lettering (11) associated therewith and, on the other hand, with the differing distance of the particular block of lettering (11) from the light source (13), in such a way that the blocks of lettering (11) are uniformly illuminated.

2. Device according to claim 1, characterised in that the diaphragm (15) has a light-reflecting surface (17) towards the light source (13) and that, at a distance from this surface (17), a further light-reflecting surface (18) is located opposite the diaphragm (15).

3. Device according to claim 2, characterised in that the light source (13) is located between the two light-reflecting surfaces (17, 18).

4. Device according to claim 3, characterised in that the second light-reflecting surface (18) is formed by a printed circuit board (19) located in the housing (12a).

5. Device according to claim 4, characterised in that the diaphragm (15) and the printed circuit board (19) lie parallel to the face plate (10) and that the diaphragm (15), in the region of the light source (13), extends approximately in the middle between the face plate (10) and the light source (13).

6. Device according to one of the preceding claims, characterised in that some of the orifices (16) in the diaphragm (15) are arranged as pairs of slots (16b) on either side next to the blocks of lettering (11) to which they are allocated.


**Revendications**

1. Dispositif pour éclairer plusieurs cartouches d'inscription d'une plaque frontale avec une source lumineuse placée dans un boîtier recouvert par cette plaque frontale, un écran étant placé entre la source lumineuse et la plaque frontale, dispositif caractérisé en ce que l'écran (15) comporte au voisinage des cartouches d'inscription (11) des ouvertures (16) dont les dimensions ou le nombre croissant, d'une part, avec les dimensions des cartouches d'inscription (11) qui leur sont associées et, d'autre part, avec l'éloignement respectif de chacun des cartouches d'Inscription (11) par rapport à la source lumineuse (13) de façon que les cartouches d'inscription (11) soient uniformément éclairés.

2. Dispositif selon la revendication 1, caractérisé en ce que l'écran (15) comporte du côté de la source lumineuse (13) une surface réfléchissant la lumière (17), tandis qu'à une certaine distance de cette surface (17) une autre surface réfléchissant la lumière (18) est placée en face de l'écran (15).

3. Dispositif selon la revendication 2, caractérisé en ce que la source lumineuse (13) est disposée entre les deux surfaces réfléchissant la lumière (17, 18).

4. Dispositif selon la revendation 3, caractérisé en ce que la seconde surface réfléchissant la lumière (18) est constituée par une plaque de circuits imprimés (19) disposée dans le boîtier (12a).

5. Dispositif selon la revendication 4, caractérisé en ce que l'écran (15) et la plaque de circuits imprimés (19) sont parallèles à la plaque frontale (10) et que l'écran (15), au voisinage de la source lumineuse (13) est à peu près à mi-distance entre la plaque frontale (10) et la source lumineuse (13).

6. Dispositif selon une des revendications précédentes, caractérisé en ce que les ouvertures (16) de l'écran (15) revêtent pour une partie d'entre elles, la forme de fentes appariées, diposées de part et d'autre au voisinage des cartouches d'inscription (11) qui leur sont associés.

## FIG. 1

## FIG. 2

## FIG. 3